# EUROPEAN PATENT APPLICATION

(11) **EP 2 902 659 A1**
(43) Date of publication of application: **05.08.2015**
(21) Application number: 13834197.9
(22) Date of filing: 03.09.2013
(51) Int. Cl.: F16F 15/134

(54) **TORSIONAL VIBRATION REDUCTION DEVICE**

(30) Priority: 03.09.2012 JP 2012193057
(71) Applicant: Valeo Unisia Transmissions Kabushiki Kaisha, Atsugi-shi Kanagawa 243-0213 (JP)
(72) Inventor: TSUNODA, Koichi, Atsugi-shi Kanagawa 243-0213 (JP); FUJITA, Takashi, Atsugi-shi Kanagawa 243-0213 (JP)
(74) Representative: Michalski Hüttermann & Partner Patentanwälte mbB
(86) International application number: PCT/JP2013/073602
(87) International publication number: WO 2014/034941

(57) **Abstract**

Provided is a torsional vibration reduction device contrived to achieve both of a greater vibration reduction effect and a higher allowable torque even with low torsional rigidity due to employment of a long travel configuration and to ensure the same rotary torque characteristics between the case of rotation in a forward direction and the case of rotation in a reverse direction. The torsional vibration reduction device includes an input rotary member 2, 3, an output rotary member 5, a spring housing part forming spring receiving parts at both end parts thereof in the relative rotation direction of the input and output rotary members, a pair of helical compression springs 17, 18 arranged in series in the spring housing part, and an intermediate member having an intermediate spring receiving part interposed between the pair of helical compression springs. In at least one of the pair of helical compression springs, stopper members 49, 50 having a length shorter than the length of the helical compression spring and being able to contact with the spring receiving part 46 of the spring housing part and with the intermediate spring receiving part 48 of the intermediate member is disposed.

## Description

### Technical Field

The present invention relates to a torsional vibration reduction device called a "long travel damper" disposed between an engine serving as a prime motor and a transmission serving as a power transmission device in an automobile.

### Background Art

The following torsional vibration reduction device as described in, e.g., Japanese Patent Publication No. 5-77891 and Japanese Patent Laid-Open No. 2007-285335 has been known as a so-called long travel torsional vibration reduction device of this type. In such a torsional vibration reduction device, at each of the positions at equal intervals in the circumferential direction between a substantially-discoid input rotary member and a substantially-discoid output rotary member, a pair of helical compression springs are arranged in series with a floating equalizer being interposed therebetween. Moreover, the following torsional vibration reduction device has been proposed in Patent Literatures 1 and 2. In such a torsional vibration reduction device, helical compression springs used in pairs and being in serial arrangement are configured to exhibit so-called "two-stage characteristics" as overall spring characteristics thereof, provided that the helical compression springs used in pairs are employed for longer traveling as described above.

### Citation List

### Patent Literature

Patent Literature 1: Japanese Patent Laid-Open No. 2009-19640
Patent Literature 2: Japanese Patent Laid-Open No. 2009-150431

### Summary of Invention

### Technical Problem

However, according to the torsional vibration reduction device described in Patent Literature 1, in combination with the configuration in which each pair of helical compression springs are different from each other in spring characteristics (spring constant), a hysteresis unit such as a wave washer is used for the helical compression spring having a higher rigidity (higher spring constant). Thus, the helical compression spring having a lower rigidity (lower spring constant) is compressed until adjacent turns of a spring wire come into close contact with each other. This still remains as the issue on durability. For such a reason, an allowable torque between the input and output rotary members is limited. With low torsional rigidity due to employment of the long travel configuration, it is difficult to achieve both of a greater vibration reduction effect and a higher allowable torque.

Moreover, according to the torsional vibration reduction device described in Patent Literature 2, in combination with the configuration in which each pair of helical compression springs have the same spring characteristics (spring constant), the unit configured to regulate the amount of compression displacement of either one of the helical compression springs. Thus, the helical compression spring whose compression displacement amount is to be regulated is alternately switched between the case where the relative rotation direction of the input and output rotary members is a normal rotation direction (forward direction of torsion) and the case where the relative rotation direction of the input and output rotary members is a reverse rotation direction (reverse direction of torsion), and therefore, there is a possibility that the characteristics of the rotary torque between the input and output rotary members change between the case of rotation in the forward direction and the case of rotation in the reverse direction.

For example, depending on the specifications of an engine or a transmission to be combined with a long travel torsional vibration reduction device, there are demands that both of a greater vibration reduction effect and a higher allowable torque are achieved even with low torsional rigidity due to employment of the long travel configuration described above and that the same rotary torque characteristics are ensured between the case where the relative rotation direction of the input and output rotary members is the forward direction (forward direction of torsion) and the case where the relative rotation direction of the input and output rotary members is the reverse direction (reverse direction of torsion). However, the torsional vibration reduction device described in Patent Literature 2 cannot meet the foregoing demands.

The present invention has been made in view of the foregoing problems, and is intended to provide a torsional vibration reduction device contrived to achieve both of a greater vibration reduction effect and a higher allowable torque even with low torsional rigidity due to employment of a long travel configuration and to ensure the same rotary torque characteristics between the case of rotation in a forward direction and the case of rotation in a reverse direction.

### Solution to Problem

A torsional vibration reduction device of a first aspect of the present invention includes an input rotary member formed in a substantially-circular shape; an output rotary member formed in a substantially-circular shape and disposed opposite to the input rotary member concentrically and rotatable in a forward/reverse direction relative to the input rotary member; a spring housing part formed, at each of the input and output rotary members, on the outer circumferential side in the radial direction of the each of the input and output rotary members relative to the center thereof, and forming spring receiving parts at both end parts of the spring housing part in the relative rotation direction of the input and output rotary members; at least a pair of helical compression springs arranged in series in the relative rotation direction of the input and output rotary members in the spring housing part, and being different from each other in spring constant; an intermediate member including an intermediate spring receiving part interposed between the pair of helical compression springs so as to protrude from an annular part toward the side of pair of helical compression springs, the annular part being positioned on the outer circumferential side in the radial direction of the each of the input and output rotary members relative to the pair of helical compression springs; and a stopper member disposed in at least one of the pair of helical compression springs, having a length shorter than the length of the at least one of the pair of helical compression springs, and being able to contact with one, provided for the one of the pair of helical compression springs, of the spring receiving parts of the spring housing part and with the intermediate spring receiving part of the intermediate member.

The input rotary member is a member interposed between a crankshaft of an internal combustion engine (engine) and an input shaft of a transmission device and configured to provide a torque to an input side. For example, the input rotary member may be provided using a drive plate and/or a side plate. Although the material and shape of the input rotary member are not limited, the input rotary member is preferably made of the material having a certain degree of rigidity so that the input rotary member can be resistant to vibration due to rotation, and is preferably in a substantially-circular shape as viewed in the plane so that the input rotary member can be adapted to rotation movement.

The output rotary member is an output-side member to which the torque from the input side is transmitted, and may be provided using, e.g., a hub plate. Although the material and shape of the output rotary member are not limited, the output rotary member is preferably made of the material having a certain degree of rigidity so that the output rotary member can be resistant to vibration due to rotation, and is preferably in a substantially-circular shape as viewed in the plane so that the output rotary member can be adapted to rotation movement. The input and output rotary members are arranged so as to rotate relative to each other.

The elastic body housing part preferably has the function of housing the elastic body to be elastically deformed in conjunction with relative rotation movement of the input and output rotary members, and preferably includes, at both ends thereof, contact parts with which the elastic body comes into contact. Specifically, the elastic body housing part may be provided using, e.g., a spring housing part formed in such a manner that the drive plate, the side plate, and the hub plate are drilled to form cutouts.

The pair of elastic bodies, the first elastic body, and the second elastic body each has a unique elastic modulus, and are members to be elastically deformed in conjunction with rotation movement by the torque. For example, these elastic bodies may be provided using springs or members made of a resin material and having a particular shape. However, it is preferable to employ the springs, and high-rigidity metal compression springs are most preferably employed. The members different from each other in elastic modulus are employed as the pair of elastic bodies, the first elastic body, and the second elastic body.

The phrase of the elastic bodies being "arranged in series in the relative rotation direction of the input and output rotary members" means the state in which, when the input and output rotary members rotate relative to each other, the elastic bodies are connected together in the circumferential direction by such rotation, and therefore, are arranged in series or the state in which the elastic bodies are arranged so as to be indirectly connected together with a member being interposed therebetween.

The intermediate member is interposed between the input and output rotary members, and has a buffering function. Specifically, the intermediate member may be provided using a ring-shaped floating equalizer disposed concentric with the output rotary member (e.g., a hub plate) on the outer circumferential side thereof. The following configuration of the intermediate member is preferable. The annular part is disposed on the outer circumferential side of the intermediate member in the radial direction, and the intermediate elastic body receiving part protrudes from the annular part toward the inner circumferential side in the radial direction, i.e., toward the pair of elastic bodies, so as to be interposed between the pair of elastic bodies. Contrary to such a configuration, the configuration may be employed, in which the annular part is disposed on the inner circumferential side in the radial direction and the intermediate elastic body receiving part protrudes toward the outer circumferential side in the radial direction. The intermediate elastic body receiving part may be provided as an equalizer protrusion or a canopy.

The core member is a member disposed in the space surrounded by an inner sliding surface of the elastic body and preferably including a substantially-circular cylindrical body and an end part (or both end parts) in the shape of part of a sphere. The core member may be provided as a stopper member or a control member for preventing the elastic body surrounding the core member from being compressed and deformed above a certain degree. After the surrounding elastic body is compressed and deformed to the length of the core member, the surrounding elastic body is subjected to compression force in the axial direction of the core member due to the difference in elastic modulus between the surrounding elastic body and the core member. The shape of the core member is not limited to the foregoing, and the core member may be in a rectangular columnar shape, an irregular spherical shape, or a spring shape. That is, a so-called "spring nested structure" may be employed, in which the elastic member is a spring and the core member embedded in the elastic member is another spring. Resin is preferable as the material of the core member, but other materials such as metal or stone may be employed.

According to the foregoing configuration, the pair of elastic bodies different from each other in elastic modulus are arranged in series, and the core member is disposed in the space surrounded by the inner sliding surface of at least one of the pair of elastic bodies. Thus, after the elastic bodies are compressed and deformed at multiple stages according to different values of elastic modulus, the core member comes into contact with an associated one of the elastic body receiving parts of the elastic body housing part and the intermediate elastic body receiving part of the intermediate member. Thus, compression deformation of the elastic body is reduced after the elastic body is compressed to the length of the embedded core member, and then, subsequent compression is switched to compression according to the elastic modulus of the core member.

Alternatively, the foregoing torsional vibration reduction device may be, as a second aspect, a torsional vibration reduction device including an input rotary member formed in a substantially-circular shape as viewed from the front; an output rotary member formed in a substantially-circular shape as viewed from the front and disposed opposite to the input rotary member concentrically and rotatable in a forward/reverse direction relative to the input rotary member; an elastic body housing part formed, at each of the input and output rotary members, on the outer circumferential side in the radial direction of the each of the input and output rotary members relative to the center thereof as viewed from the front, and forming elastic body receiving parts at both end parts of the elastic body housing part in the relative rotation direction of the input and output rotary members; first and second elastic bodies arranged in series in the relative rotation direction of the input and output rotary members in the elastic body housing part; an intermediate member including an intermediate elastic body receiving part interposed between the first and second elastic bodies so as to protrude from an annular part toward the first and second elastic bodies, the annular part being positioned on the outer circumferential side in the radial direction of the each of the input and output rotary members relative to the first and second elastic bodies; and first and second core members arranged respectively in the first and second elastic bodies, each having a length shorter than the length of an associated one of the first and second elastic bodies, and each being able to contact with one, provided for the associated one of the first and second elastic bodies, of the elastic body receiving parts of the elastic body housing part and with the intermediate elastic body receiving part of the intermediate member.

That is, the foregoing torsional vibration reduction device may be configured to allow the case where the first and second elastic bodies are not different from each other in elastic modulus in the first aspect. If the first and second elastic bodies are not different from each other in elastic modulus, compression deformation operation of the elastic bodies are more simplified as compared to multistage compression deformation operation due to the difference in elastic modulus between the elastic bodies. Accordingly, the load of compression deformation is substantially-equally applied to the elastic bodies arranged in series, and therefore, the effect of slowing down aging degradation can be expected.

As another alternative, the foregoing torsional vibration reduction device may be, as a third aspect, a torsional vibration reduction device including an input rotary member formed in a substantially-circular shape as viewed from the front; an output rotary member formed in a substantially-circular shape as viewed from the front and disposed opposite to the input rotary member concentrically and rotatable in a forward/reverse direction relative to the input rotary member; an elastic body housing part formed, at each of the input and output rotary members, on the outer circumferential side in the radial direction of the each of the input and output rotary members relative to the center thereof as viewed from the front, and forming elastic body receiving parts at both end parts of the elastic body housing part in the relative rotation direction of the input and output rotary members; an elastic body disposed in the relative rotation direction of the input and output rotary members in the elastic body housing part; and a core member disposed in the elastic body, having a length shorter than the length of the elastic body, and being able to contact with one, provided for the elastic body, of the elastic body receiving parts of the elastic body housing part.

That is, the intermediate member including the intermediate elastic body receiving part as in the first aspect is omitted. Moreover, the single elastic body (e.g., a compression spring) is disposed such that the core member is disposed therein. According to such a configuration, the simple structure in which the nested structure of the elastic body and the core member is disposed in each elastic body housing part is provided, and multistage compression deformation due to the difference in elastic modulus occurs in compression deformation accompanied by relative rotation.

In each of the foregoing aspects, the core member is, at least one of end parts thereof, preferably in the shape of a spherical end surface, and one of the elastic body receiving parts corresponding to the at least one of the end parts of the core member is in a recessed shape fitting to the shape of the spherical end surface. Moreover, the core member is preferably made of resin.

That is, both ends of the core member (e.g., a stopper member) are in the shape of the raised part forming part of the spherical surface, and the surface of the spring receiving part of the spring housing part contacting the stopper member and the surface of the intermediate spring receiving part of the intermediate member contacting the stopper member are in the shape of the recessed part forming part of a spherical surface, and such a recessed part has a radius substantially equal to that of the end part of the stopper member. Thus, in relative rotation of the input and output rotary members in the forward direction and the reverse direction, the stopper member comes into contact with the elastic body receiving part of the elastic body housing part and with the intermediate elastic body receiving part of the intermediate member respectively, and then, compression deformation of each of the pair of elastic bodies (e.g., helical compression springs) is limited after contact of the stopper member. Such a relationship does not change even if the relative rotation direction of the input and output rotary members is reversed. Moreover, employment of resin can ensure a certain degree of rigidity, and can avoid friction between metal components.

### Advantageous Effects of Invention

According to the present invention, since the spring force of the pair of helical compression springs having different spring constants acts in series in relative rotation of the input and output rotary members, low torsional rigidity is exhibited as a whole, and a greater vibration reduction effect can be achieved. Of the pair of helical compression springs, the spring having a lower spring constant is compressed. After the stopper member embedded in such a spring contacts the spring receiving part and the intermediate spring receiving part, compression deformation of the helical compression spring having a lower spring constant is limited, and only the helical compression spring having a higher spring constant is compressed and deformed. Subsequently, the spring having a higher spring constant is compressed. After the stopper member embedded in such a spring contacts with the spring receiving part and with the intermediate spring receiving part, compression deformation of the helical compression spring having a higher spring constant is also limited. Thus, a higher allowable torque can be ensured. Consequently, both of a greater vibration reduction effect and a higher allowable torque are achieved even with low torsional rigidity.

Not only in the case where the input and output rotary members rotate relative to each other in the forward direction, but also in the case where the input and output rotary members rotate relative to each other in the reverse direction, compression deformation of the helical compression spring having a lower spring constant is first limited, and subsequently, only the helical compression spring having a higher spring constant is compressed and deformed. Then, compression deformation of the helical compression spring having a higher spring constant is also limited. Thus, the same rotary torque characteristics can be achieved between the case where the relative rotation direction of the input and output rotary members is the forward direction and the case where the relative rotation direction of the input and output rotary members is the reverse direction.

### Brief Description of Drawings

[Figure 1] Figure 1 is a cross-sectional view illustrating a first embodiment of a torsional vibration reduction device of the present invention and taken along a line A-A of Figure 2.
[Figure 2] Figure 2 is a right front view of the torsional vibration reduction device illustrated in Figure 1.
[Figure 3] Figure 3 is a front view illustrating the state in which a side plate is detached from the torsional vibration reduction device illustrated in Figure 2.
[Figures 4] Figures 4(A) and 4(B) are views separately illustrating the details of a drive plate illustrated in Figure 1. Figure 4(A) is the front view of the drive plate, and Figure 4(B) is the cross-sectional view of the drive plate along a line B-B of Figure 4(A).
[Figures 5] Figures 5(A) and 5(B) are views separately illustrating the details of the side plate illustrated in Figure 1. Figure 5(A) is the front view of the side plate, and Figure 5(B) is the cross-sectional view of the side plate along a line C-C of Figure 5(A).
[Figures 6] Figures 6(A) and 6(B) are views separately illustrating the details of a hub plate illustrated in Figure 1. Figure 6(A) is the front view of the hub plate, and Figure 6(B) is the cross-sectional view of the hub plate along a line D-D of Figure 6(A).
[Figures 7] Figures 7(A) and 7(B) are views separately illustrating the details of a floating equalizer illustrated in Figure 1. Figure 7(A) is the front view of the floating equalizer, and Figure 7(B) is the cross-sectional view of the floating equalizer along a line E-E of Figure 7(A).
[Figures 8] Figures 8(A) and 8(B) are views separately illustrating the details of stopper members 49, 50 illustrated in Figure 3. Figure 8(A) is the front view of the stopper members 49, 50, and Figure 8(B) is the cross-sectional view of the stopper members 49, 50 along a line F-F of Figure 8(A).
[Figures 9] Figures 9(A) to 9(C) are views separately illustrating the details of a spring sheet illustrated in Figures 2 and 3. Figure 9(A) is the front view of the spring sheet, Figure 9(B) is the left side view of Figure 9(A), and Figure 9(C) is the right side view of Figure 9(A).
[Figures 10] Figures 10(A) to 10(D) are views separately illustrating the details of a canopy illustrated in Figure 3. Figure 10(A) is the front view of the canopy, Figure 10(B) is the cross-sectional view of the canopy along a line G-G of Figure 10(A), Figure 10(C) is the plan view of the canopy, and Figure 10(D) is the cross-sectional view of the canopy along a line H-H of Figure 10 (C) .
[Figures 11] Figures 11(A) to 11(C) are views illustrating the states of the torsional vibration reduction device illustrated in Figure 1.
[Figures 12] Figures 12(A) to 12(C) are cross-sectional views illustrating different variations of the stopper members 49, 50 illustrated in Figure 3.

### Description of Embodiments

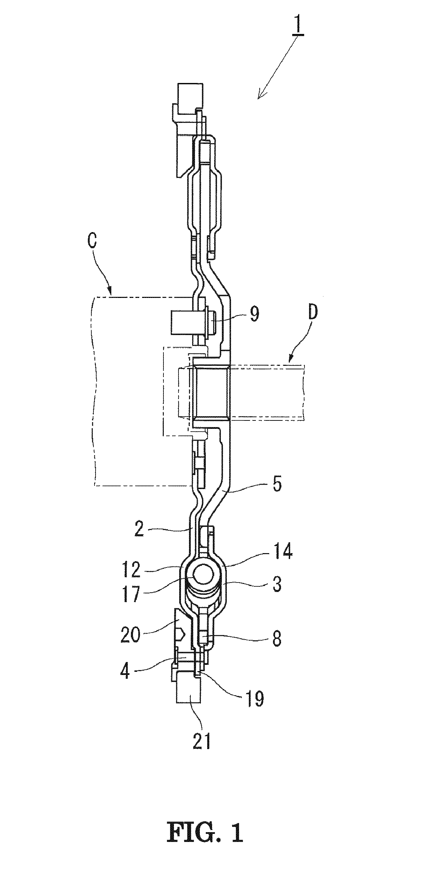

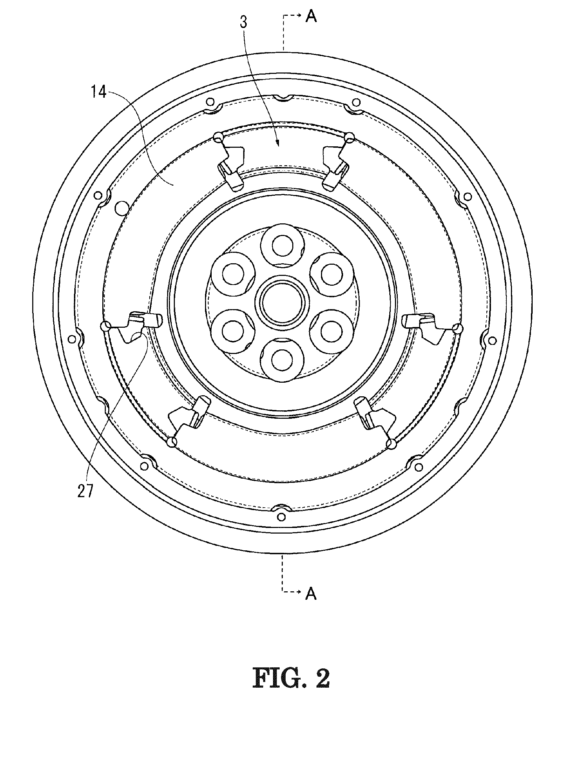

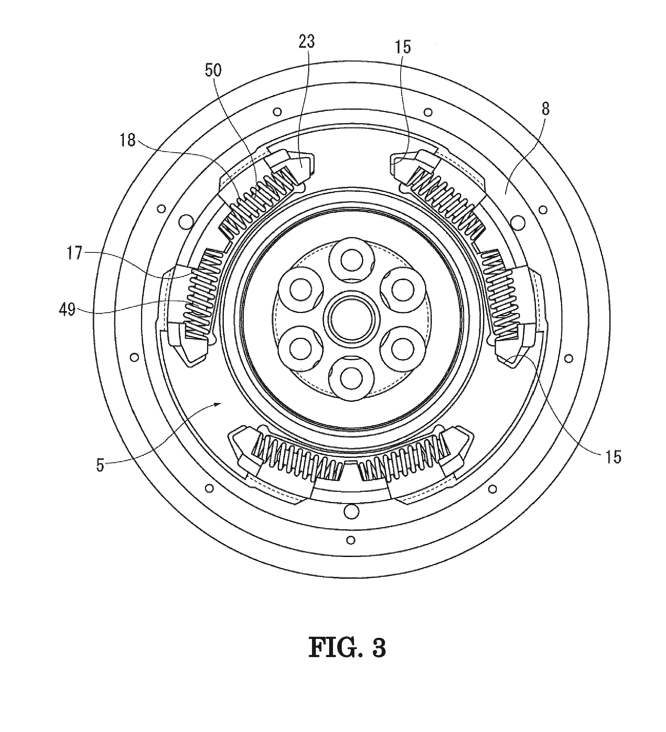

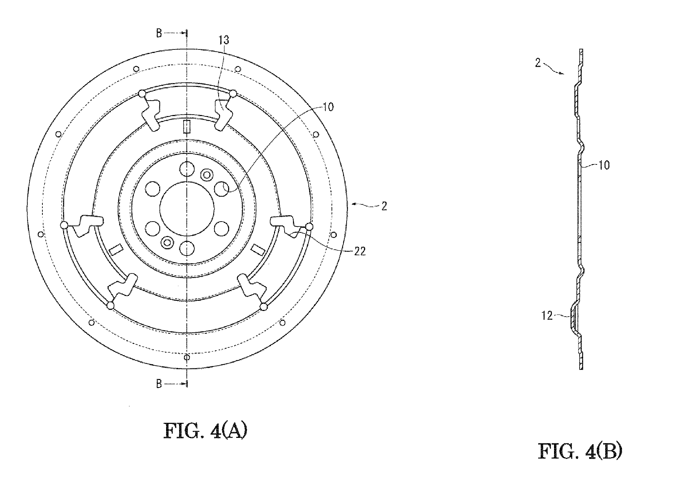

Figures 1 to 10 are views specifically illustrating a first embodiment of a long travel damper type torsional vibration reduction device (hereinafter simply referred to as a "torsional vibration reduction device") of the present invention. In particular, Figure 1 is the cross-sectional view of the torsional vibration reduction device, and Figure 2 is the right front view of the torsional vibration reduction device illustrated in Figure 1. Note that Figure 1 is the cross-sectional view along a line A-A of Figure 2. Moreover, for the sake of easy understanding of the structure of the torsional vibration reduction device, Figure 3 illustrates the state in which a side plate illustrated in Figure 2 is detached. Further, Figures 4 to 9 separately illustrate the details of each main component illustrated in Figures 1 to 3.

In Figure 1, a crankshaft C serving as an output shaft of an internal combustion engine (engine) is, on the axis extending therefrom, disposed so as to oppose, e.g., an input shaft D of a transmission device including an automatic transmission, and a torsional vibration reduction device 1 formed in a substantially-discoid shape as a whole is interposed between the crankshaft C and the input shaft D. As will be described later, a drive plate 2 functioning as an input rotary member in the torsional vibration reduction device 1 is connected to the crankshaft C with a plurality of attachment bolts 9, and a hub plate 5 functioning as an output rotary member in the torsional vibration reduction device 1 is splined to the input shaft D.

Referring to Figures 1 to 3, the torsional vibration reduction device 1 includes the hub plate 5, a floating equalizer 8 disposed at the outer periphery of the hub plate 5, and the drive plate 2 and a side plate 3 arranged so as to face each other with the hub plate 5 and the floating equalizer 8 being interposed therebetween. Referring to Figures 2 and 3, at each of three positions at substantially-equal intervals in the circumferential direction of the hub plate 5, the side plate 3, and the drive plate 2, a pair of helical compression springs (hereinafter simply referred to as a "spring" or "springs") 17, 18 are housed and arranged. Moreover, stopper members 49, 50 each being shorter than the entire length of an associated one of the springs 17, 18, each including a circular columnar body, and each being movable in the direction along the axis of an associated one of the springs 17, 18 are inserted respectively into the springs 17, 18. The stopper members 49, 50 are in such a shape that part of a sphere is attached to one or both ends thereof. Note that in the drawings, the components arranged at equal intervals on the circumference are the same as each other, and therefore, not all of the components are illustrated with the reference numerals. Each component will be described in detail later.

The floating equalizer 8 and the hub plate 5 are rotatable relative to each other, and the drive plate 2 is rotatable relative to each of the floating equalizer 8 and the hub plate 5. The drive plate 2 and the side plate 3 are, as described later, integrally fastened to each other with rivets 4, and therefore, are not rotatable relative to each other. Thus, in the torsional vibration reduction device 1 configured such that each of the pairs of springs 17, 18 arranged at three positions in the circumferential direction are elastic members, the drive plate 2 and the side plate 3 function as an input rotary member of the torsional vibration reduction device 1, and the hub plate 5 functions as an output rotary member of the torsional vibration reduction device 1. In addition, the floating equalizer 8 functions as an intermediate member.

The drive plate 2 is a plate formed in a discoid shape as a whole as illustrated in Figures 1 to 3, as well as being illustrated in Figure 4. The drive plate 2 is fastened and connected to the crankshaft C with, e.g., attachment bolts 9 each inserted into an associated one of six bolt holes 10 arranged at equal intervals on the innermost side of the drive plate 2. Cover parts 12 are formed so as to protrude toward the side opposite to the side plate 3 at three positions at substantially-equal intervals in the circumferential direction of the drive plate 2, and slot parts 13 are formed respectively at both ends of each cover part 12. Each cover part 12 forms, together with a later-described cover part 14 on the side of side plate 3, a spring housing part of the input rotary member, and the pair of springs 17, 18 in serial arrangement as described later are housed in such a spring housing part.

A later-described flange part 19 on the side of the side plate 3 and a later-described annular outer circumferential mass 20 are jointly fastened and fixed to each other with the rivets 4 at the circumferential part of the drive plate 2. Moreover, a ring gear 21 is press-fitted into the outer circumferential mass 20. Note that the outer circumferential mass 20 functions as a mass body configured to stabilize rotation of the engine, and the ring gear 21 engages with a not-shown starter gear to provide the rotative force for starting the engine.

An end surface 22 of the slot part 13 provided at each end of the cover part 12 functions as a spring receiving part, and each of the pair of springs 17, 18 housed in the cover part 12 is, at one end thereof, stopped by the end surface 22 of the slot part 13 through a spring sheet 23.

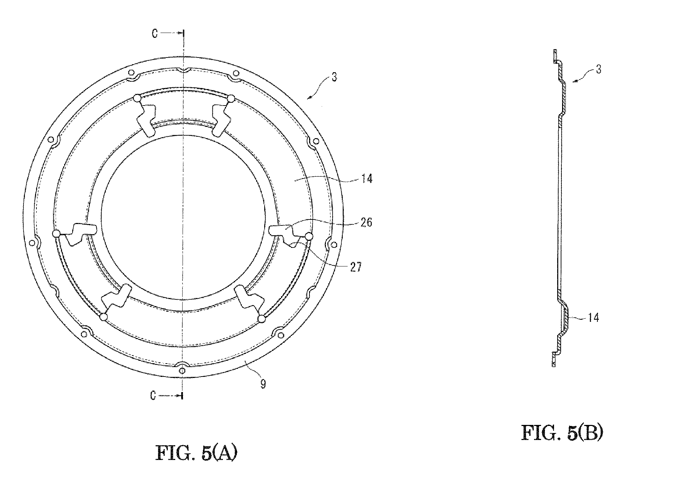

The side plate 3 functioning, together with the drive plate 2, as the input rotary member is an annular plate being concentric with the drive plate 2 and having the same diameter as that of the drive plate 2 as illustrated in Figures 1 to 3, as well as being illustrated in Figure 5. The flange part 19 is formed so as to be bent at the outer circumferential part of the side plate 3, and is, together with the outer circumferential mass 20, jointly fastened and fixed to the drive plate 2 with the rivets 4 as described above. As in the drive plate 2, the cover parts 14 each including slot parts 26 at both ends thereof are formed so as to protrude toward the side opposite to the drive plate 2 at three positions in the circumferential direction of the side plate 3. Each cover part 14 on the side of the side plate 3 forms, together with an associated one of the above-described cover parts 12 on the side of the drive plate 2, the spring housing part of the input rotary member side, and the pair of springs 17, 18 in serial arrangement are housed in such a spring housing part. Moreover, as in the end surface on the side of the drive plate 2, each of the pair of springs 17, 18 housed in the spring housing part is, at one end thereof, stopped by an end surface 27 of the slot part 26 through the spring sheet 23, and therefore, the end surface 27 of the slot part 26 functions as a spring receiving part.

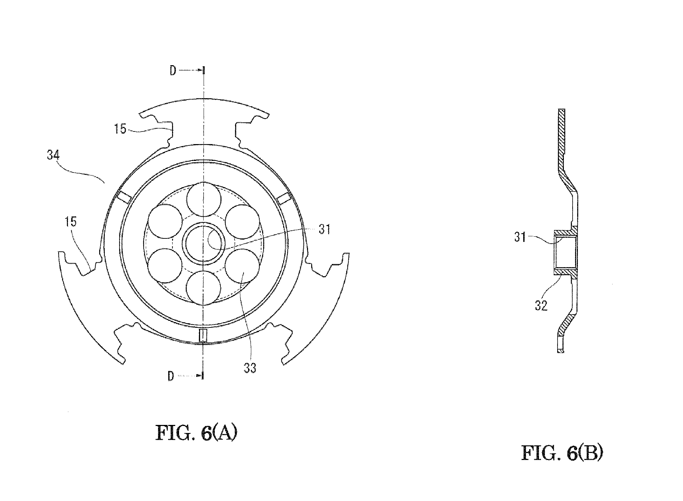

On the other hand, the hub plate 5 functioning as the output rotary member is a circular shallow-pan-shaped plate having a smaller diameter than those of the drive plate 2 and the side plate 3 as illustrated in Figures 1 to 3, as well as being illustrated in Figure 6. A boss part 32 including a female spline part 31 at the center thereof is integrally formed at the hub plate 5. Referring to Figure 1, the boss part 32 is splined to a male spline part of the input shaft D. Moreover, six relief holes 33 are formed at equal pitches on the outer circumferential side of the boss part 32 at the hub plate 5. As will be clearly seen from Figure 1, these relief holes 33 are used when the attachment bolts 9 for fastening the above-described drive plate 2 into the crankshaft C are screwed in.

At the circumferential edge of the hub plate 5, spring receiving recesses 34 functioning as spring housing parts of the output rotary member are formed such that three circumferential edge parts of the hub plate 5 positioned at equal intervals in the circumferential direction are cut out. The position of each spring receiving recess 34 corresponds to the position of an associated pair of cover part 12 of the drive plate 2 and cover part 14 of the side plate 3, the cover parts 12, 14 functioning as the spring housing parts of the input rotary member. The pair of springs 17, 18 in serial arrangement as described above are housed and arranged in the space formed by the cover parts 12, 14 and the spring receiving recess 34 of the hub plate 5. Moreover, each end surface 15 of the spring receiving recess 34 in the circumferential direction functions as a spring receiving part on which one end of an associated one of the pair of springs 17, 18 is seated through the spring sheet 23.

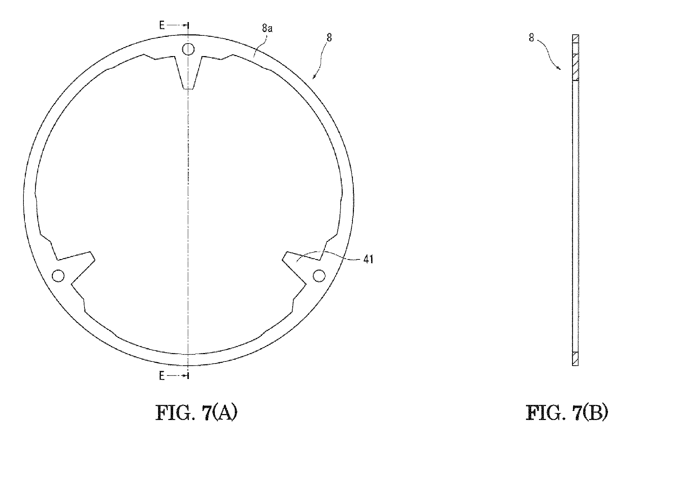

Referring to Figures 1 to 3 and Figure 7, the floating equalizer 8 functioning as the intermediate member is in such a ring shape disposed concentric with the hub plate 5 on the outer circumferential side of the hub plate 5 on the same plane as the outer circumferential edge part of the hub plate 5. Referring to Figure 7, equalizer protrusions 41 functioning as intermediate spring receiving parts are formed so as to protrude inward from an annular part 8a of the floating equalizer 8. Note that a resin canopy 44 which will be described later is fitted into each equalizer protrusion 41 described above.

As described above, both of the drive plate 2 and the side plate 3 function as the input rotary member, and the hub plate 5 functions as the output rotary member. Moreover, each of the pairs of the cover part 12 of the drive plate 2 and the cover part 14 of the side plate 3 at three positions in the circumferential direction functions as the spring housing part of the input rotary member, and each of the spring receiving recesses 34 of the hub plate 5 at three positions in the circumferential direction functions as the spring housing part of the output rotary member.

Referring to Figure 3, the cover part 12 of the drive plate 2, the cover part 14 of the side plate 3, and the spring receiving recess 34 of the hub plate 5 house the pair of springs 17, 18 in serial arrangement through the resin spring sheets 23, and the equalizer protrusion 41 (see Figure 7) on the side of the floating equalizer 8 is, together with the later-described canopy 44, interposed between the pair of springs 17, 18.

The pair of springs 17, 18 are different from each other in characteristics thereof. The pair of springs 17, 18 are the same as each other in length thereof, but are different from each other in spring constant (rigidity) thereof. Of each of the pairs of springs 17, 18 at three positions in the circumferential direction as illustrated in Figure 3, the spring 18 positioned in the clockwise direction relative to the canopy 44 has a higher spring constant (higher rigidity), and the spring 17 positioned in the counter-clockwise direction relative to the canopy 44 has a lower spring constant (lower rigidity), more specifically. The differences of the characteristics between the springs 17, 18 are determined depending on, e.g., the diameter of the spring wire or the number of turns of the spring wire.

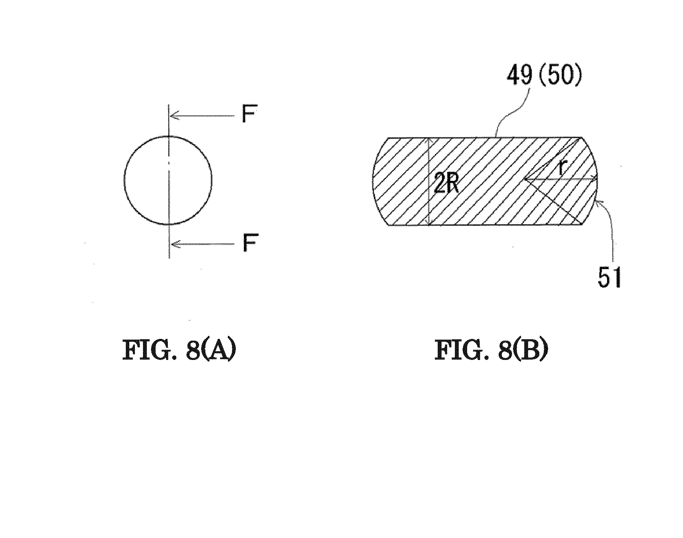

Figures 8(A) and 8(B) are the views illustrating the details of the stopper members 49, 50 to be inserted into the springs 17, 18. Figure 8(A) is the front view of the stopper members 49, 50 in the axial direction thereof, and Figure 8(B) is the cross-sectional view of the stopper members 49, 50 along a line F-F. The stopper members 49, 50 have a length shorter than the entire length of the springs 17, 18, and are in such a shape 51 that each tip end part integrally formed with the circular columnar body is a raised part forming part of a spherical surface (e.g., forming a substantially-semispherical surface). Moreover, the stopper members 49, 50 are movable in the axial direction thereof in the springs 17, 18. Hard resin such as nylon 66 is preferably used as the material of the stopper members 49, 50. In this case, the radius r of the part of the spherical surface of the tip end part is preferably equal to or greater than the radius R of the circular columnar body.

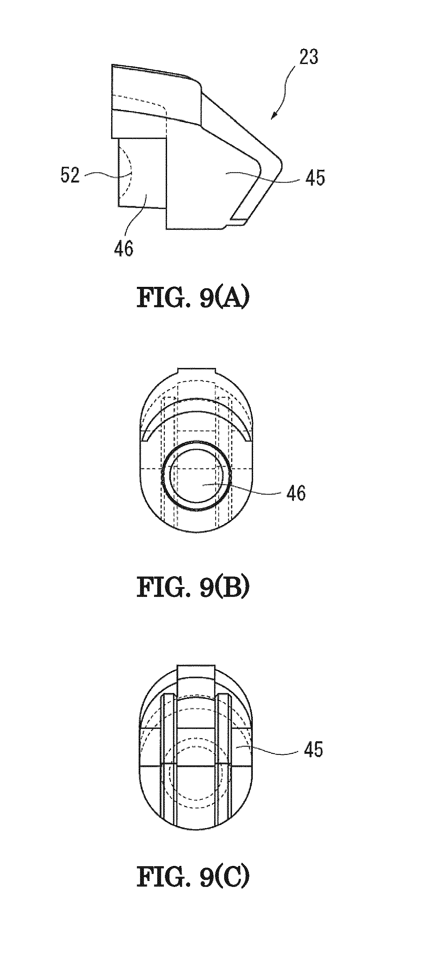

Figures 9(A) to 9(C) are the views illustrating the details of the resin spring sheet 23 illustrated in Figures 2 and 3. Figure 9(A) is the front view of the spring sheet 23, Figure 9(B) is the left side view of Figure 9(A), and Figure 9(C) is the right side view of Figure 9(A). Referring to Figures 9(A) to 9(C), protrusions 45 are formed so as to be fitted into the spring receiving part, i.e., the end surfaces of the cover parts 12, 14 (see Figures 4 and 5) and the spring receiving recess 34 (see Figure 6), and a boss part 46 supporting end parts of the springs 17, 18 is formed. The surface of the boss part 46 being able to contact the stopper members 49, 50 is, corresponding to the raised spherical surface of the end part of the stopper members 49, 50, formed in the shape 52 of a recessed surface forming part of a spherical surface. In this case, the radius of the recessed spherical part is preferably equal to or slightly greater than the radius of the stopper members 49, 50.

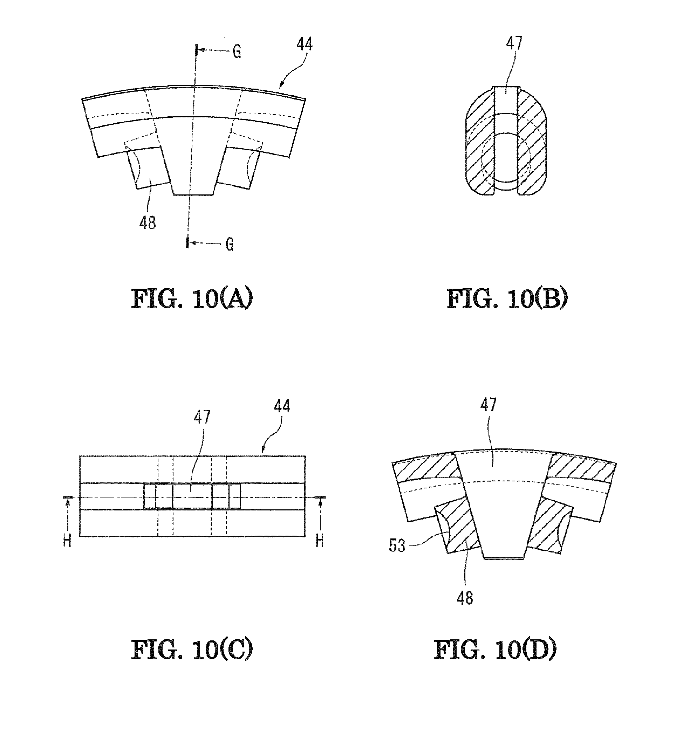

Figures 10(A) to 10(D) illustrate the details of the resin canopy 44 described above. Figure 10(A) is the front view of the canopy 44, Figure 10(B) is the cross-sectional view of the canopy 44 along a line G-G, Figure 10(C) is the plan view of the canopy 44, and Figure 10(D) is the cross-sectional view of the canopy 44 along a line H-H. Referring to Figures 10(A) to 10(D), a slot part 47 to be inserted into the equalizer protrusion 41 on the side of the floating equalizer 8 illustrated in Figure 7 is formed at the canopy 44, and boss parts 48 each supporting an associated one of the end parts of the springs 17, 18 are formed at the canopy 44 as in the spring sheet 23. The surface of each boss part 48 being able to contact an associated one of the stopper members 49, 50 is, corresponding to the raised spherical surface of the end part of the associated one of the stopper members 49, 50, formed in the shape 53 of a recessed surface forming part of a spherical surface. In this case, the radius of the recessed spherical part is preferably equal to or slightly greater than the radius of the associated one of the stopper members 49, 50.

The functions and operation of the torsional vibration reduction device 1 configured as described above will be described. Referring to Figure 1, the drive plate 2 and the side plate 3 together functioning as the input rotary member are not rotatable relative to each other, and the hub plate 5 functioning as the output rotary member is rotatably disposed between the drive plate 2 and the side plate 3. The total of three pairs of springs 17, 18 are, together with the floating equalizer 8, interposed between the input rotary member and the output rotary member. At the initial stage of rotation, while the springs 17 having a lower spring constant (lower rigidity) and the springs 18 having a higher spring constant (higher rigidity) are being compressed and deformed, a rotary torque input from the side of the crankshaft C of Figure 1 toward the drive plate 2 is transmitted to the hub plate 5, and then, is transmitted from the hub plate 5 to the input shaft D. As just described, at the initial stage of rotation, torsional vibration in the process of rotary torque transmission as described above is absorbed or reduced by the elasticity of each pair of springs 17, 18 in compression deformation thereof.

Referring to Figure 2, the stopper members 49, 50 each having a length shorter than the entire length of an associated one of the springs 17, 18 are inserted respectively into the springs 17, 18. Thus, in the case of further rotating the rotary members, when the drive plate 2 including the side plate 3 and the hub plate 5 rotate relative to each other, the springs 17, 18 are gradually compressed and deformed according to the spring constants thereof, and the entire length of the spring 17 eventually reaches the length of the stopper member 49 (at this point, the entire length of the spring 18 does not reach the length of the stopper member 50 yet). In the case of still further rotating the rotary members, the spring 18 is compressed and deformed with the entire length of the spring 17 being maintained at the length of the stopper member 49, and then, the entire length of the spring 18 finally reaches the length of the stopper member 50. Within the foregoing range of compression deformation, the drive plate 2 including the side plate 3 and the hub plate 5 can rotate relative to each other.

Since the stopper member 49 has the foregoing shape, the stopper member 49 is able to contact with the boss part 46 of the spring sheet 23 functioning as part of the spring receiving part of the spring 17 having a lower spring constant and with the boss part 48, provided for the spring 17 having a lower spring constant, of the canopy 44 functioning as part of the intermediate spring receiving part.

In addition, the stopper members 49, 50 are in such a shape that the bodies thereof are in a circular columnar shape and each end part thereof forms part of the spherical surface. Thus, in compressing the springs 17, 18 as described above, even if the end parts of the stopper members 49, 50 contact with the inner sliding surface of the springs 17, 18, the spring 17, 18 can be smoothly compressed without blocking movement of the stopper members 49, 50.

Note that the length of each stopper member 49, 50 may be optionally determined depending on desired torsional characteristics.

Further, the boss part 46 of the spring sheet 23 and the boss part 48 of the canopy 44 are, corresponding to the shape of the end parts of the stopper members 49, 50, in such a shape that each end part thereof forms part of the recessed spherical surface. Thus, each stopper member 49, 50 can smoothly contact an associated one of the boss parts 46, 48. Consequently, abrasion and wrenching of the members can be reduced or prevented. This leads to a long-term use.

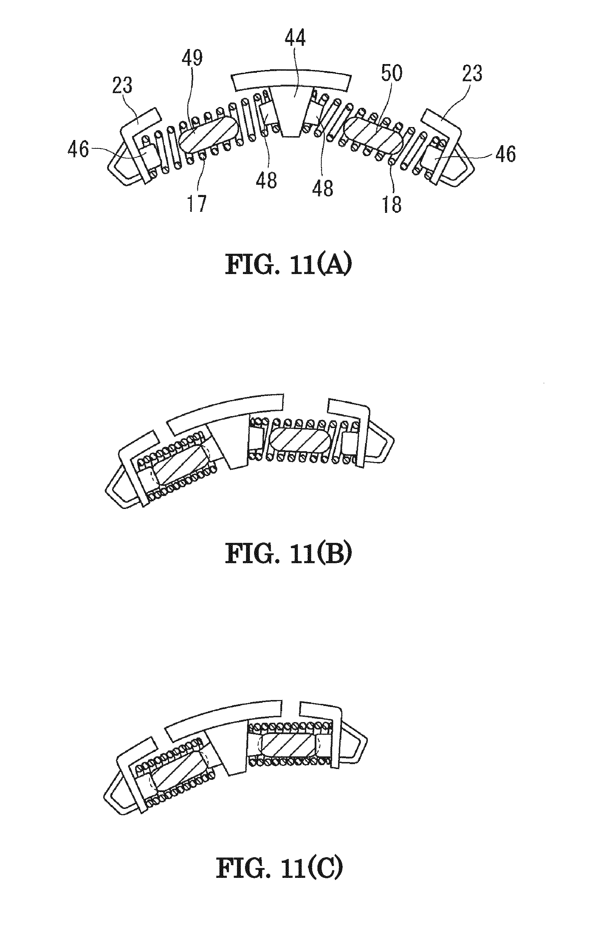

The operation of the system in which each stopper member 49, 50 is inserted into an associated one of the springs 17, 18 as described above will be described in more details. Figures 11(A) to 11(C) are views more specifically illustrating the states of a main part of the torsional vibration reduction device of the present invention. Figure 11(A) is the cross-sectional view illustrating a neutral state, Figure 11(B) is the cross-sectional view illustrating the contact state of the stopper member 49, and Figure 11(C) is the cross-sectional view illustrating the contact state of the stopper member 50. When the hub plate 5 rotates, starting from the neutral state illustrated in Figure 11(A), in the counter-clockwise direction relative to the drive plate 2 including the side plate 3, both springs 17, 18 are compressed and deformed at the initial stage as described above, and the stopper member 49 inserted into the spring 17 having a lower spring constant eventually comes into contact with the boss part 46 of the spring sheet 23 and with the boss part 48 of the canopy 44 as illustrated in Figure 11(B).

After the stopper member 49 contacts both of the boss parts 46, 48, the spring 17 having a lower spring constant is not further compressed and deformed, and subsequently, only the spring 18 having a higher spring constant is compressed and deformed. When compression deformation continues, the stopper member 50 inserted into the spring 18 having a higher spring constant comes into contact with the boss part 46 of the spring sheet 23 and with the boss part 48 of the canopy 44.

Subsequently, the stopper members 49, 50 are, in proportion to a rotation load, further compressed and deformed according to the elastic modulus of the stopper members 49, 50. The stopper members 49, 50 may only be slightly compressed and deformed depending on the elastic modulus. This is based on the precondition that the rigidity of the stopper members 49, 50 is higher than that of the springs 17, 18.

The foregoing relationship does not change even if the side of the drive plate 2 and the side plate 3 together twist relative to the hub plate 5 or twist in either direction.

As described above, in the present embodiment, regardless of the relative rotation direction of the drive plate 2 and the side plate 3 serving as the input rotary member and the hub plate 5 serving as the output rotary member, the stopper member 49 inserted into the spring 17 exhibits, using the floating equalizer 8 as a medium, a stopper effect between the side plate 3 serving as the input rotary member and the floating equalizer 8, and also exhibits a stopper effect between the hub plate 5 serving as the output rotary member and the floating equalizer 8. Thus, the amount of compression deformation of the spring 17 having a lower spring constant can be reliably limited before adjacent turns of the spring wire of the spring 17 having a lower spring constant come into contact with each other.

Thus, regardless of the relative rotation direction of the drive plate 2 and the side plate 3 serving as the input rotary member and the hub plate 5 serving as the output rotary member, the same torque characteristics between the input and output rotary members can be exhibited between rotation in the forward direction and rotation in the reverse direction.

In other words, not only in the case where the drive plate 2 and the side plate 3 serving as the input rotary member and the hub plate 5 serving as the output rotary member rotate relative to each other in the forward direction, but also in the case where the input and output rotary members rotate relative to each other in the reverse direction, compression deformation of the spring 17 having a lower spring constant is first limited, and subsequently, only the spring 18 having a higher spring constant is compressed and deformed. Thus, the same rotary torque characteristics can be achieved between the case where the relative rotation direction of the input and output rotary members is the forward direction and the case where the relative rotation direction of the input and output rotary members is the reverse direction.

Moreover, since the spring force of the pair of springs 17, 18 having different spring constants acts in series, low torsional rigidity is exhibited as a whole, and a greater vibration reduction effect can be achieved. One of the stopper members 49, 50 contacts an associated one of the side plate 3 or the hub plate 5 before the other one of the stopper members 49, 50 contacts an associated one of the side plate 3 or the hub plate 5. Subsequently, compression deformation of the spring 17 having a lower spring constant is limited, and only the spring 18 having a higher spring constant is compressed and deformed. Thus, a higher allowable torque can be ensured, and both of a greater vibration reduction effect and a higher allowable torque are achieved even with low torsional rigidity.

In terms of a structure, the stopper members 49, 50 are only inserted respectively into the stopper members 49, 50. Thus, as compared to other methods for limiting compression deformation, the structure is simplified, and space is saved.

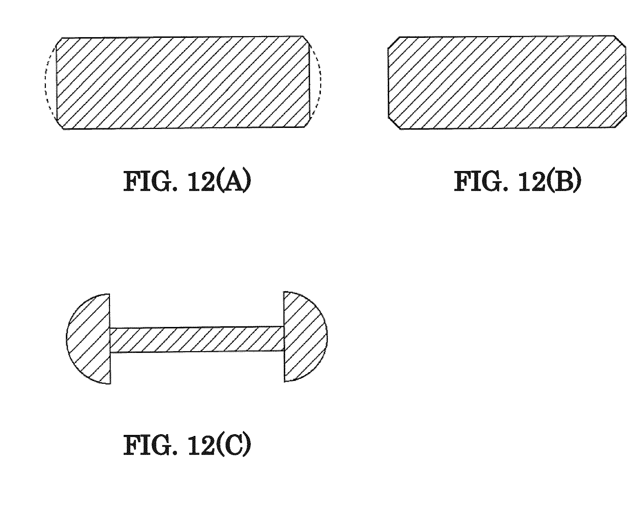

Note that the shape of the body of the stopper member is not necessarily the circular columnar shape, and may be a rectangular columnar shape or a hollow circular or rectangular cylindrical shape. In addition, regardless of shapes, the stopper member is not limited to the elastic body, and may be a rigid body. Any shape of the end part of the stopper member may be employed as long as galling of the spring does not occur. For example, referring to Figures 12(A) to 12(C), the stopper member may be in such a shape that spherical end parts are cut (see Figure 12(A)) or that spherical end parts are R-chamfered or C-chamfered (Figure 12(B)). Alternatively, it is not necessary that the body and end parts of the stopper member are integrally formed, and the stopper member may be in such a shape that a sphere or part of a sphere is fixed to a columnar body, a cylindrical body, or a rigid body (see Figure 12(C)). As another alternative, the foregoing processing is not necessarily performed for all of the stopper members and/or the boss parts, and may be performed only for the most effective one(s) of those components.

The springs 17, 18 do not necessarily have different spring constants, and may have the substantially-same spring constant. In this case, these two springs are compressed at the substantially-same degree. Thus, if the stopper members have the same length, the stopper members come into contact with the spring receiving parts at the substantially-same timing. If the stopper members have different lengths, the longer stopper member first comes into contact with the spring receiving part, and subsequently, compression continues until the shorter stopper member contacts the spring receiving part.

The springs are not necessarily arranged in pairs at three positions, and a single spring may be disposed at each of three positions. In this case, the floating equalizer 8 and the canopy 44 are not required.

The foregoing embodiment has been set forth merely as an example. Needless to say, variations and modifications can be made without departing from the spirit of the present invention. If the present invention is incorporated into a secondary product, the value given to the present invention is not lowered.

### Reference Signs List

- 1: torsional vibration reduction device
- 2: drive plate (input rotary member)
- 3: side plate (input rotary member)
- 5: hub plate (output rotary member)
- 8: floating equalizer (intermediate member)
- 8a: annular part
- 15: end surface (spring receiving part) of spring housing recess
- 17: helical compression spring having lower spring constant
- 18: helical compression spring having higher spring constant
- 12: cover part (spring housing part)
- 14: cover part (spring housing part)
- 22: end surface (spring receiving part) of slot part
- 23: spring sheet
- 27: end surface (spring receiving part) of slot part
- 34: spring housing recess (spring housing part)
- 41: equalizer protrusion (intermediate spring receiving part)
- 44: canopy
- 46: boss part of spring sheet
- 48: boss part of canopy
- 49: stopper member
- 50: stopper member

## Claims

1. A torsional vibration reduction device comprising:
an input rotary member formed in a substantially-circular shape as viewed from a front;
an output rotary member formed in a substantially-circular shape as viewed from the front and disposed opposite to the input rotary member concentrically and rotatable in a forward/reverse direction relative to the input rotary member;
an elastic body housing part
formed, at each of the input and output rotary members, on an outer circumferential side in a radial direction of the each of the input and output rotary members relative to a center thereof as viewed from the front, and
forming elastic body receiving parts at both end parts of the elastic body housing part in a relative rotation direction of the input and output rotary members;
at least a pair of elastic bodies
arranged in series in the relative rotation direction of the input and output rotary members in the elastic body housing part, and
being different from each other in elastic modulus;
an intermediate member including an intermediate elastic body receiving part interposed between the pair of elastic bodies so as to protrude from an annular part toward the pair of elastic bodies, the annular part being positioned on the outer circumferential side in the radial direction of the each of the input and output rotary members relative to the pair of elastic bodies; and
a core member
disposed in at least one of the pair of elastic bodies,
having a length shorter than a length of the at least one of the pair of elastic bodies, and
being able to contact with one, provided for the at least one of the pair of elastic bodies, of the elastic body receiving parts of the elastic body housing part and with the intermediate elastic body receiving part of the intermediate member.

2. A torsional vibration reduction device comprising:
an input rotary member formed in a substantially-circular shape as viewed from a front;
an output rotary member formed in a substantially-circular shape as viewed from the front and disposed opposite to the input rotary member concentrically and rotatable in a forward/reverse direction relative to the input rotary member;
an elastic body housing part
formed, at each of the input and output rotary members, on an outer circumferential side in a radial direction of the each of the input and output rotary members relative to a center thereof as viewed from the front, and
forming elastic body receiving parts at both end parts of the elastic body housing part in a relative rotation direction of the input and output rotary members;
first and second elastic bodies arranged in series in the relative rotation direction of the input and output rotary members in the elastic body housing part;
an intermediate member including an intermediate elastic body receiving part interposed between the first and second elastic bodies so as to protrude from an annular part toward the first and second elastic bodies, the annular part being positioned on the outer circumferential side in the radial direction of the each of the input and output rotary members relative to the first and second elastic bodies; and
first and second core members
arranged respectively in the first and second elastic bodies,
each having a length shorter than a length of an associated one of the first and second elastic bodies, and
each being able to contact with one, provided for the associated one of the first and second elastic bodies, of the elastic body receiving parts of the elastic body housing part and with the intermediate elastic body receiving part of the intermediate member.

3. A torsional vibration reduction device comprising:
an input rotary member formed in a substantially-circular shape as viewed from a front;
an output rotary member formed in a substantially-circular shape as viewed from the front and disposed opposite to the input rotary member concentrically and rotatable in a forward/reverse direction relative to the input rotary member;
an elastic body housing part
formed, at each of the input and output rotary members, on an outer circumferential side in a radial direction of the each of the input and output rotary members relative to a center thereof as viewed from the front, and
forming elastic body receiving parts at both end parts of the elastic body housing part in a relative rotation direction of the input and output rotary members;
an elastic body disposed in the relative rotation direction of the input and output rotary members in the elastic body housing part; and
a core member
disposed in the elastic body,
having a length shorter than a length of the elastic body, and
being able to contact with one, provided for the elastic body, of the elastic body receiving parts of the elastic body housing part.

4. The torsional vibration reduction device of any one of claims 1 to 3, wherein
the core member is, at least one of end parts thereof, in a shape of a spherical end surface, and one of the elastic body receiving parts corresponding to the at least one of the end parts of the core member is in a recessed shape fitting to the shape of the spherical end surface.

5. The torsional vibration reduction device of any one of claims 1 to 3, wherein
the core member is made of resin.
